# EUROPEAN PATENT APPLICATION

(11) **EP 2 474 817 A1**
(43) Date of publication of application: **11.07.2012**
(21) Application number: 11000128.6
(22) Date of filing: 10.01.2011
(51) Int. Cl.: G01J 3/02, G02B 27/12

(54) **Image slicing instruments and method**

(71) Applicant: European Organization for Astronomical Research in the Southern Hemisphere, 85748 Garching (DE)
(72) Inventor: Avila, Gerardo, 85748 Garching bei München (DE); Guirao, Carlos, 85748 Garching bei München (DE)
(74) Representative: Grünecker, Kinkeldey, Stockmair & Schwanhäusser

(57) **Abstract**

An image slicer is disclosed which includes a first surface 1 and a second surface 2. The surfaces are inclined with respect to each other, wherein the first surface has an edge 3 and the second surface has an edge 4 and these edges are alongside but inclined with respect to each other. A light beam 9 having a first beam portion 12 that hits the first surface and a second beam portion that does not hit the first surface will thus be at least partially refracted by the image slicer, wherein the first beam portion will be guided, due to refraction, in another direction than the second beam portion.

## Description

In order to achieve information about chemical or physical properties of substances or objects, spectrographs are widely used in science, in particular in astronomy and physical or analytical chemistry. Therewith, light emitted from the substances or objects under consideration can be analysed and characterised with regard to its frequency spectrum, so as to draw conclusions about the substance's or object's atomic composition or properties.

Such spectrographs often include a slit element which light coming from a lens has to pass through before entering a refracting prism or a grating which then produces a frequency spectrum that may be investigated by using an appropriate detector.

Without further provision, and unless the light spot coming from the lens has a very small diameter, the slit element would cut out a narrow light portion only of the light spot, while light portions not entering the slit were lost for the spectral evaluation. However, in order to increase accuracy of the measurement, in many cases, such light losses are to be avoided. Therefore, a Bowen - Walraven image slicer is often included in the arrangement, to direct as much light of the spot through the slit as possible or necessary. This instrument is made of prisms and a thin plane-parallel plate and provides for transforming a disk-shaped spot into slices thereof, wherein the light slices leave the slicer in-line one above the other, such that the line of slices can pass the slit.

However, production of Bowen - Walraven image slicers requires very precise surface treatment which results in high production costs. Besides, the dimensions of the Bowen - Walraven image slicers have to be chosen depending on the size of the light spot for which a slicer is to be used, in order to avoid overlap of the slices in the slit. As a consequence, different Bowen - Walraven image slicers have to be used for different operations. For instance, for a first star, a Bowen - Walraven image slicer may be required which is inappropriate for observing a second star. Finally, the different spot slices emerging a Bowen - Walraven image slicer each are produced by a particular number of reflections inside the parallel plate of the slicer. This results in different distances the various slices cover between the lens and the slit, so that defocusing may disturb the precise evaluation of the produced spectrum.

The instant invention is directed to the problem of how to overcome some or all of these problems. These objects are met with the image slicer of claim 1, the spectrograph of claim 12, the system of claim 13 and the method of claim 14. Preferred embodiments are disclosed in the dependent claims.

The image slicers given by the present invention utilise an inclination of surfaces with respect to each other to split a light beam. A portion of the light beam is thus guided, due to refraction or reflection, in another direction than another portion of the light beam.

Preferably, the image slicers considered have a diameter of at most 5 cm, more preferably of at most 3.5 cm and even more preferably of at most 2 cm.

In a preferred embodiment, an image slicer includes a first and a second surface which are inclined with respect to each other in a manner that an edge of the first surface and an edge of the second surface are alongside (while possibly separated by a gap or one or more further surface(s)) but inclined with respect to each other. For example, the first and second surface may be adjacent but rotated with respect to each other around an axis that traverses the interior area of both surfaces. As a consequence, the transition between the first and second surface may include two steps in different directions. The rotation angle in this case is preferably larger than 0.2°, 0.5°, 1 °, 2°, 5°, 8° or 10° and/or smaller than 12°, 15°, 20° or 25°. Preferably, said edges lie in a same plane or in planes that are parallel to each other.

In the following, when apparently increasing intelligibility, in view of the intended utilisation of the surfaces, the first and second surfaces are also referred to as the first and second light entrance surfaces, respectively. Preferably, the first and second surfaces are flat, i.e., they form part of a respective plane.

At least a part of a preferred image slicer is of an optically transparent or translucent material such as glass or acrylic.

A light beam having a first beam portion hitting the first surface and a second beam portion not hitting the first surface can be at least partially deflected by the image slicer, wherein the first beam portion will be guided, due to refraction, in another direction than the second beam portion.

The original, i.e., the incoming light beam may be the image of a star provided by a telescope or may be any other light beam to be analysed by the spectrograph. The incoming light beam may be guided to the image slicer by an optical fibre. The distance between the fibre end where the light exits the fibre and the image slicer may be smaller than or equal to 1 mm, or smaller than or equal to 0.1 mm.

Before reaching the image slicer, the light may pass one or more lenses, and/or it may be reflected by one or more mirrors. Such an intermediate optic element or elements may be provided in a spectrograph including the image slicer. For example, if the light is guided by an optical fibre, a lens may be provided between an end of the optical fibre and the image slicer, such that light exiting the optical fibre is directed through the lens and, thereafter, through the image slicer. In this case, the distance between said end of the optical fibre and the lens may be in the range of 0.2mm to 10mm, such as 3mm, for example.

The incoming light beam may thus include or consist of parallel rays, focused rays and/or diverging rays. The diameter of the light beam where hitting the image slicer may be from about 100µm to 1 mm.

Said first light beam portion preferably penetrates the image slicer, thus defines a light path and exits the image slicer at a side that is opposite to a side including the first and second light entrance surfaces. The profile of this opposite side preferably has a similar shape as the side including the first and second light entrance surface. For example, the opposite side may likewise include a first and second surface which are inclined with respect to each other and each have a respective edge such that these edges are alongside but inclined with respect to each other. In particular, a preferable shape is such that the first beam portion having entered the image splitter through the first light entrance surface exits the image splitter through a surface that is parallel to the first light entrance surface. As a consequence, when exiting the beam splitter, the first beam portion may have a direction that is shifted in parallel as compared to its direction when entering the beam splitter. According to Snell's law, when the material a first beam portion traverses is homogeneous, the angle of the deflection of the first beam portion is determined by the refraction index of the material and by the angle under which the first beam portion hits the first surface.

Preferable is an embodiment in which at least a part of the second beam portion (i.e., of the portion not hitting the first light entrance surface) takes a course that is analogous to that of the first beam portion, i.e. that defines a light path from the second light entrance surface to a second exit surface which likewise is positioned at a side opposite to the light entrance surfaces, wherein the part of the second beam portion or the entire second beam portion is also deflected by refraction. The inclination of the first and second light entrance surface with respect to each other may cause the first beam portion to be refracted in another direction than a part of or the entire second beam portion. As a consequence, the first and second beam portions (or a part thereof), even when entering the image slicer close to each other (e.g., forming a single spot), may be separated so as to exit the image slicer distant from each other. The different spot portions, each having a smaller area than the entering light beam may then be caught, side by side, by a spectrograph's slit, or the slit element may even be rendered unnecessary and left out. For example, when the entering light beam spot is shaped as a circular disc, the resulting different spot portions may each be a half of the circular disc, as if they were half-moons.

Preferably, the image slicer is such that the light paths of the beam portions having entered the image slicer through the first and second surface, respectively, both have the same length within the image slicer. Thereby, defocusing of one of the spot portions as compared to the other can be avoided.

The first and/or second light entrance surface or surfaces may be covered, entirely or partially, with an antireflective coating. Such a coating increases the efficiency of the image slicer, as it minimises light losses. Additionally or alternatively, the surface or surfaces where the light exits the image slicer is covered partially or entirely with an antireflective coating, to reduce light losses, thus to upgrade the efficiency of the image slicer.

Preferably, the first and second light entrance surfaces are side faces of a respective prism-shaped portion of the image slicer. The further surfaces and edges of these portions may be abstract. That is, it is not necessary that said portions are physically defined in some manner. Indeed, when the image slicer is in use, any material of the image slicer not intersecting with or limiting the light beam's path or paths within the image slicer does not influence the image slicer's function. The presence or absence of such circumjacent material thus does not delimit the instant invention.

In a preferred embodiment, the image slicer includes two equal prism-shaped portions which preferably are made of the same material and whose base faces are parallelograms and positioned so as to face each other. This may provide for each of the light beam portions entering and exiting a corresponding prism through side faces that respectively lie in parallel planes. Thereby, the entering light beam and the exiting light beam portions may have the same directions, i.e., they are shifted in parallel with respect to each other. Due to the equal shape and material of the prisms, no phase shift or different path length occurs between beam portions having penetrated the first and second prism, respectively, and defocusing can be avoided.

The first and second light entrance surfaces may be surfaces of a single element such as a transparent body in which the first and second surface are cut (so as to be inclined with respect to each other and so as to each have a respective edge alongside and inclined to the corresponding edge of the other surface).

The image slicer's side opposite to the first and second light entrance surfaces may include a third surface, which is parallel to the first light entrance surface, and a fourth surface, which is parallel to the second light entrance surface. The transition between the third and fourth surfaces may be inclined with respect to the transition between the first and second light entrance surface. Stated differently, the third surface may lie in a plane A that is parallel to a plane including the first light entrance surface, the fourth surface may each lie in a plane B that is parallel to a plane including the second light entrance surface, and the intersection line of planes A and B is inclined with respect to those above mentioned edges of the first and second light entrance surfaces which are alongsinde but inclined with respect to each other. This is in particular advantageous when the first and second light entrance surfaces are surfaces of a single element. Indeed, the provision of such inclined transitions may provide for that a light beam portion entering the first (second, respectively) light entrance surface may exit the image slicer, along with its diverging portions, (e.g. only) through the third (fourth, respectively) surface. For example, the transition between the third and fourth surfaces may be given by a common edge thereof (included in the intersection line of the planes A and B), this common edge not being coplanar with any one of those edges of the first and second light entrance surface which are alongside but inclined with respect to each other. The common edge of the third and fourth surfaces may, for instance, be orthogonal to each of said edges of the first and second light entrance surface. However, the transition may be given as a region and/or it may include various edges, or it may be bevelled or chamfered.

Due to such an arrangement of the third and fourth surfaces, a light beam portion having entered the image slicer through the first light entrance surface will be refracted, even if partially diverging inside the image slicer, in another direction than a light beam portion having entered the image slicer through the second light entrance surface. Therefore, the light beam portions are separated along with their respective diverging parts.

The first and second surfaces may each be included in a surface of a respective first and second element, such as of a respective slab made of glass or another transparent or translucent material. This embodiment may simplify the production of the image slicer, as the slabs themselves are easy to produce and to be positioned with respect to each other so as to form the image slicer, possibly after an appropriate treatment such as a polishing and/or an aluminising.

Indeed, at least one or both of such elements may include an aluminised surface. For instance, when the two elements are placed in contact with each other, the contact surface of at least one of the elements is preferably aluminised. Thereby, a reflectivity inhibiting a light beam portion traversing from one element into the other through the contact surface can be provided. As a consequence, an overlap of the resulting light beam portions can be avoided, regardless of the diameter of the original light beam spot.

The first and second element may be arranged with respect to each other such that each element includes a surface that faces a respective surface of the respective other element. In an exemplary embodiment, an air gap is provided between these surfaces (which then are preferably both aluminised), such that a part of the second beam portion (i.e., of the portion not hitting the first surface) can traverse the air gap, while another part of the second beam portion can hit the second light entrance portion. This arrangement may provide for splitting a light beam in three portions, namely a first portion traversing the first element, a second portion traversing the second element, and a third portion traversing the gap. Due to the arrangement of the first and second light entrance surfaces with respect to each other, the irradiation may be carried out such that the beam portions traversing the first and second element are refracted in different directions, while the portion traversing the air gap is not refracted. Thereby, from the original single spot, three spot portions may be created in line, each having a smaller area than the original spot. The separated spot portions may then fit through a slit element of the spectrograph, or they may directly be guided to a refracting prism or grating to produce a frequency spectrum.

When no air gap is devised between the first and second element, the positioning of the first and second elements may include gluing them together. Preferably, a glue with a refraction index lower than the elements' material or materials is used, in order to provide for a total internal reflection. This may increase the efficiency of the image slicer and avoid overlap of the spot portions.

Alternatively or additionally, the first and second elements may be put in optical contact with each other, i.e., such that the elements are held together by intermolecular forces. This may further increase the optical efficiency and/or avoid aluminising. Preferably, when two elements are put in optical contact with each other, the surface(s) where the light exits the image slicer is (or are) arranged such that a transition thereof is inclined with respect to the transition between the first and second surface, as described above. Thus, the image slicer in this case preferably includes a third and a fourth surface, whose transition (from one to another) is inclined to the above-mentioned edges of said first and second light entrance surfaces, the edges being alongside but inclined with respect to each other. Therein, the third and fourth surface each are parallel to a respective one of the first and second surface. That is to say, the third surface may form part of a plane A that is parallel to a plane including the first surface, the fourth surface may form part of a plane B which is parallel to a plane including the second light entrance surface, and the intersection line of planes A and B is inclined with respect to said alongside and inclined edges of the first and second light entrance surfaces.

Each of the first and the second element may include a portion of both the third and fourth surface. Due to the optical contact of the elements, the light beam portion having entered the image slicer through a first light entrance surface (of the first element) may, when traversing the image slicer, diverge into the second element. In the same way, light having entered the second element may diverge into the second element. However, analogously to the above-explained situation where the image slicer is made of a single element, the beam portions are separated along with their respective diverging parts and they also exit the image slicer along with these diverging parts, through a dedicated one of the third and fourth surface being a respective light exit surface.

In an embodiment of the present invention, the image slicer includes one or more further surfaces that are inclined with respect to the first and to the second surface and, if more than one further surface is included, also to every other further surface. These surfaces are likewise named herein as "light entrance surfaces". Each pair of the first light entrance surface, the second light entrance surface and the further light entrance surface(s) has a pair of edges of the corresponding surfaces, such that the edges are alongside but inclined with respect to each other.

The respective surfaces may be included in surfaces of various elements and/or common elements. For instance, each of the first, second and further surface(s) may be included in a surface of a respective element. These elements may be arranged side by side, possibly including a gap and/or wherein some or all elements are (preferably pairwise) glued together, have an aluminised surface and/or are put in close contact with each other. Preferably, if an outmost of these elements is denominated by element A, the extent of inclination of the light entrance surfaces as compared to the light entrance surface of element A increases with the distance of the respective element to said element A. Thereby, an incoming beam may be transformed in an in-line sequence of spot portions, due to the different refraction within the various elements.

The above described embodiments are particularly advantageous when utilised in a spectrograph further including (apart from a refracting prism or grating) a light capturing device having photosensitive pixels that are arranged in a two dimensional array. An appropriate arrangement of the elements in the spectrograph may then result in that the spectra corresponding to different slices are cast on different lines of photosensitive pixels. As a consequence, even if different wavelength ranges corresponding to different slices may be dispersed so as to appear on the same vertical axis, the spectra do not overlap because they are projected one above the other. For example, the spectrum corresponding to a first slice may extend in one or more lines above those lines where the spectrum corresponding to a second slices extends. Both the green region of the spectrum corresponding to the first slice and the red region of the spectrum corresponding to the second slice may then be projected on the vertical centre line of the light capturing device. Due to the two-dimensional arrangement of the photosensitive pixels, both colour regions nevertheless can be detected separately, as they hit different pixel lines, even though in the same pixel column(s).

The present invention further provides a spectrograph including an image slicer and an optical component such as a lens or pinhole or an end of an optical fibre having an optical axis. Therein, the image slicer is arranged with respect to the optical component such that a light beam having passed the optical component along its optical axis will irradiate a portion of an edge (further referred to as a slicing edge) of the image slicer and include a first beam portion that hits a first surface of the image slicer and a second beam portion that does not hit the first surface of the image slicer.

Preferably, the first beam portion will be guided, due to refraction, in another direction than the second beam portion.

The thus sliced light beam may be applicable without further reduction to the analysing components of the spectrograph, such as a refracting prism or grating.

Alternatively, the spectrograph may further include a slit element arranged on the optical axis of the optical component, wherein the image slicer is between the slit element and the optical component. The slit of the slit element is preferably slightly inclined with respect to the slicing edge of the image splitter, such as by an angle of at most 10° or 5° or 2°, so as to achieve that the centres of at least two beam spot portions (separated by the image slicer) reach a centre line of the slit. This may provide for the slit letting pass as much light of the original beam as possible. Preferably, the angle of inclination between said edge and the slit corresponds to the shift of the beam portion(s), due to refraction within the image slicer. In a preferred embodiment, the angle is adjustable, such as to allow adapting it to the diameter of a light beam passing the optical component.

The arrangement of the components of the spectrograph may be such that the second beam portion passes the image slicer, i.e. such that the second beam portion does not penetrate the beam slicer but directly reaches an analysing component of the spectrograph, such as a refracting prism or grating, possibly after having passed a slit of a slit element further included in the spectrograph. In this case, the second beam portion is not refracted, but it is split from the first beam portion due to refraction of the latter.

Alternatively, the spectrograph may be such that at least a part of the second beam portion may hit a second surface of the image slicer, wherein the second surface is inclined with respect to the first surface. The above mentioned slicing edge may then be an edge of the first surface, and the second surface may have an edge that is alongside the edge of the first surface, but inclined with respect to it. The image splitter may further have one or various of the above detailed properties.

A system according to the present invention includes at least two analysis instruments such as spectrographs and at least one of the above-described image slicers. These components are arranged with respect to each other (and possibly with further components such as one or more mirrors) such that a first beam portion exiting the image slicer reaches a first one of the instruments and a second beam portion exiting the image slicer reaches a second one of the instruments. The instruments may then analyse the respective beam portion independently from each other. The image slicer may thus replace a beam splitter or dichroic element commonly used for investigating the light's spectrum with high resolution. As compared to such beam splitters, the image slicer provides the advantage of reduced disturbance of the spectral properties of the light. Moreover, a cross section of one or both of the resulting beam portion(s) is preferably shaped so as to be included in a rectangle of a minimal area having different side lengths. Thus, the cross section may appear as a spot that is longer than wide. For example, the spot may be shaped as a half disc whose length is the diameter of the disc and whose width is the radius of the disc. The slit of the corresponding spectrograph is then preferably directed such that the length of the spot is parallel to the slit. Such narrow beam portions can then each be analysed with minimal losses. The border of a spot in a cross section of the beam is given by the location where the light intensity is reduced to ½ or 1/e of the maximum intensity.

A method according to the instant invention includes the step of irradiating, with a light beam, a portion of an edge of an element, such that a first beam portion of the light beam hits a first surface of the element and a second beam portion or the light beam does not hit the first surface of the element. The element includes a transparent or translucent material.

The first beam portion is then directed, due to refraction in the transparent or translucent material, in another direction than the second beam portion.

The (original) light beam can be directed such that the second beam portion (i.e., the beam portion not hitting the first surface) passes the component without hitting it. Alternatively, the utilised component may include a second surface which is inclined with respect to the first surface, wherein the first and second surfaces each have an edge, these edges being alongside but inclined with respect to each other. The light beam may then be directed so as to hit both these edges. Preferably, the second surface is a surface (or a portion of a surface) of a transparent or translucent material. The method may further include the step of directing the light beam such that the second beam portion at least partially hits the second surface, so as to produce refraction of at least a part of the second beam portion, in another direction than the first beam portion.

Exemplary embodiments are depicted in the appended drawings. Therein,
- Fig. 1: shows an exemplary image slicer;
- Fig. 2: indicates resulting light paths when a light beam appropriately irradiates the exemplary image slicer shown in Fig. 1;
- Fig. 3A: shows an image slicer including its reverse side as preferred when the elements are put in optical contact with each other;
- Fig. 3B: shows an image slicer made of a single element;
- Fig. 4: depicts an alternative image slicer including two elements positioned with an air gap in between;
- Fig. 5: indicates lights paths resulting from a light beam irradiating the image slicer illustrated in Fig. 3; and
- Fig. 6: depicts an image slicer made of three slabs.

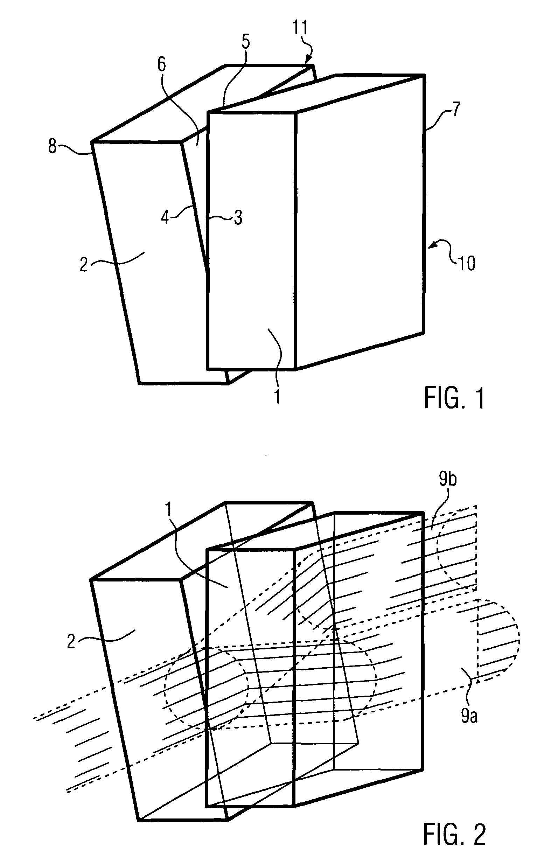

The exemplary image slicer shown in Fig. 1 includes two equal prism-shaped portions 7 and 8, such as two glass slabs each having a parallelogram-shaped base face 5 and 6, wherein the slabs are rotated with respect to each other. The base faces 5 and 6 face each other. A side face 1 of the first portion 7 includes an edge 3, and a side face 2 of the second prism-shaped portion 8 includes an edge 4, wherein the edges 3 and 4 are alongside but inclined with respect to each other. Opposite to the shown image slicer's side including the first and second surfaces 1 and 2, there are surfaces 10 and 11 which are situated in planes parallel to those of the first and second surfaces, respectively. As mentioned above, the base faces 5 and 6 are preferably at least partially aluminised, and/or glued together or put in optical contact. Moreover, some or all of the surfaces 1, 2, 10 and 11 are preferably at least partially coated with an antireflective coating.

Figure 2 illustrates a light beam 9 (consisting of parallel rays) irradiating the image slicer of Figure 1, wherein a first beam portion hits the first surface 1 and a second beam portion does not hit the first surface 1 of the image slicer. The first beam portion is refracted, in the prism-shaped portion 7, and exits this portion through the surface 10 at the image slicer's side opposite to the first surface 1. Analogously, in the exemplary case depicted, the second beam portion entirely hits the second surface. It is then also refracted, in another direction than the first beam portion, to take a light path within the second prism-shaped portion 8. The second beam portion then exits the prism-shaped portion 8 of the image slicer through surface 11. Since the surfaces 2 and 11 lie in parallel planes, and as so do the surfaces 1 and 10, respectively, the exiting light beams 9a and 9b are parallel to the original light beam 9, but both shifted with respect to it. A section orthogonal to the beams' directions results in two light spots each shaped as a half-disc.

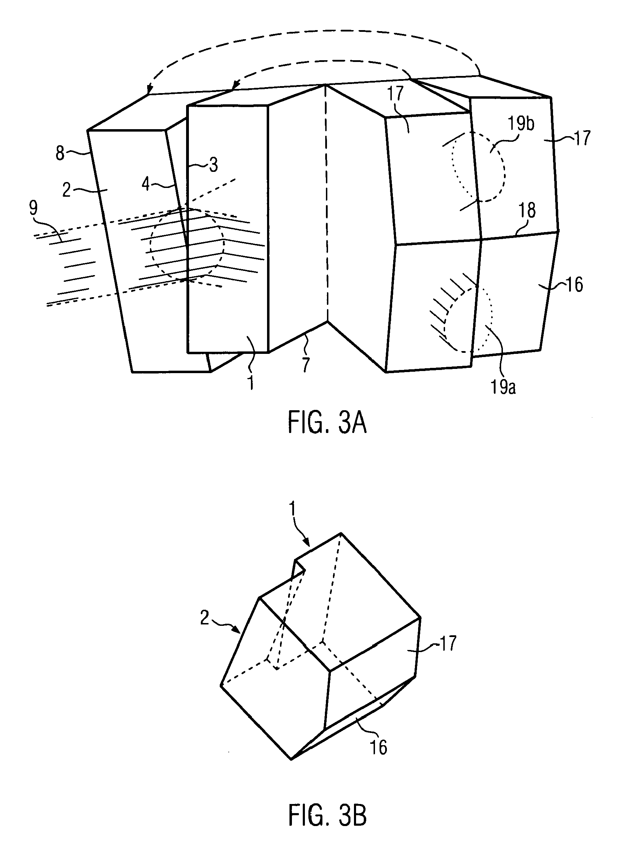

Fig. 3A shows an embodiment of the image slicer in which the reverse side includes a first and a second light exit surface 16 and 17, wherein the first light exit surface 16 is parallel to the first light entrance surface 1 and the second light exit surface 17 is parallel to the second light exit surface 2. Each of the elements 7 and 8 from which the image slicer is made include a portion of both the first and the second light exit surface 16 and 17. The transition of the first and second light exit surfaces is given by the edge 18 separating it, and this edge is inclined with respect to the transition of the first and second light entrance surfaces, the latter transition being given by the region including edges 3 and 4. It is to be noted that the transition of the light exit surfaces does not have to be given by one or more edges. Instead, it may be a region, or it may be bevelled or chamfered.

An embodiment as shown is preferred when the elements 7 and 8 from which the image slicer is made are put in optical contact with each other. As indicated in the figure, an incoming light beam 9 is sliced at the edges 3 and 4 such that two portions thereof are refracted in different directions. Both these portions exit the image slicer through a respective one of the light exit surfaces 16 or 17. In the situation depicted, the portion entering the image slicer through light entrance surface 1 of element 7 is directed downwards by the image slicer and exits the image slicer (only) through light exit surface 16, as indicated by the spot 19a. This spot extends to a part of the surface of the element 8. Thereby, even light beam portions that have been diverged inside the image slicer from element 7 to element 8 exit the image slicer through light exit surface 16, as indicated by the dotted border of spot 19a. The light beam portion entering the image slicer through surface 2 is directed upwards and traverses and exits the image slicer analogously.

Fig. 3B shows an image slicer which is formed of a single element and whose reverse side is shaped analogously to that of the image slicer shown in Fig. 3A.

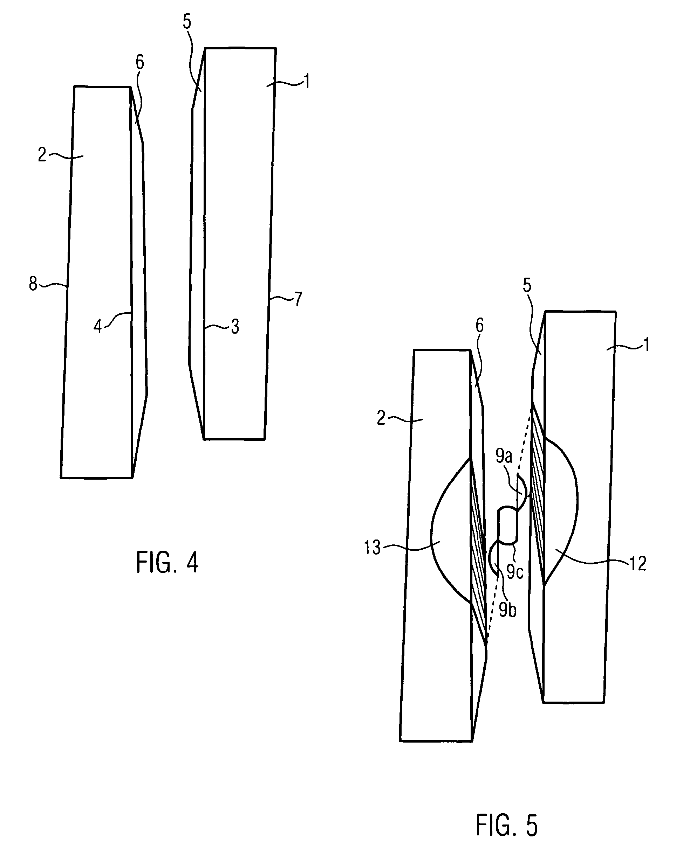

In Fig. 4, an alternative embodiment of the present invention is shown in a perspective front view. Two elements 7 and 8 are each shaped as parallelepipeds having respective base faces 5 and 6. For example, the elements may be prism shaped glass (or acrylic) slabs. The elements are positioned such that the base faces 5 and 6 face each other, but have an air gap in between. The faces 5 and 6 are preferably at least partially aluminised. The element 7 has a first surface 1 and the element 8 has a second surface 2, wherein the surfaces 1 and 2 are inclined with respect to each other. The surfaces 1 and 2 further have respective edges 3 and 4 which run alongside but inclined with respect to each other.

Figure 5 illustrates the refraction occurring when a light beam irradiates the image slicer shown in Figure 4 such that a first portion 12 of the light beam hits the first light entrance surface 1, whereas another portion of the light beam penetrates the air gap, and a third portion 13 hits the second light entrance surface 2. Indeed, the portions 12 and 13 are seen to be refracted, within the respective element, but in different directions. Behind the image slicer, three parallel beam portions 9a, 9b and 9c are formed, and a section of these beams results in three slices of the circular spot of the original light beam. As the refraction within elements 7 and 8 occurs in respective directions that lie in a plane parallel to the air gap, an overlap of the spot portions is avoided, regardless of the diameter of the original beam 9.

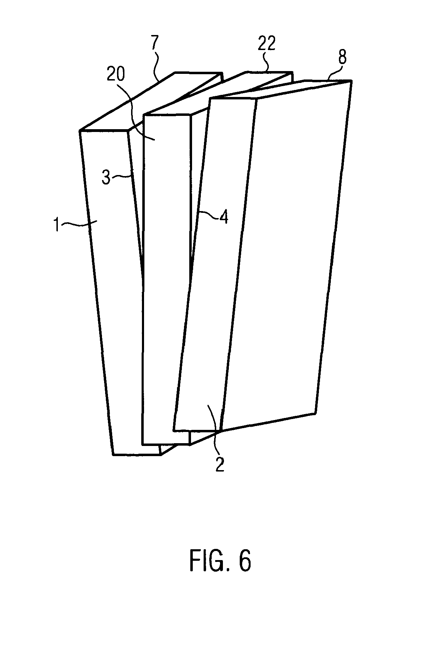

Instead of the air gap being arranged between the elements 7 and 8 as shown in Figures 4 and 5, one or more further slabs may be provided. Such an embodiment is shown in Fig. 6. Preferably, such further slabs are likewise prism shaped. Each of them may have a surface which is inclined with respect to surfaces 1 and 2 of elements 7 and 8, respectively. In the perspective of the slicer shown in Figure 6, these surfaces face the spectator. As compared to the image slicer of Figures 3 and 4, a single further slab 22 having rectangular faces is provided such that the base faces are arranged in plane contact with faces 5 and 6, respectively, and a rectangular side face 20 of the further slab is between surfaces 1 and 2. An incoming light beam of a diameter that is larger than the width of the surface 22 may then hit each of surfaces 1, 20 and 2, and the respective portions may then be directed in the corresponding directions.

## Claims

1. Image slicer for a spectrograph, the image slicer including a transparent material such as glass or acrylic, the image slicer
**characterised by**
including a first and a second surface (1; 2) which are inclined with respect to each other,
wherein the first surface has an edge E1 (3) and the second surface has an edge E2 (4), and the edges E1 and E2 are alongside but inclined with respect to each other,
such that a light beam (9) having a first beam portion (12) hitting the first surface and a second beam portion not hitting the first surface, will be at least partially refracted by the image slicer, wherein the first beam portion will be guided, due to refraction, in another direction than the second beam portion.

2. Image slicer according to claim 1, wherein the first and/or second surface (1; 2) are partially or entirely covered with an antireflective coating.

3. Image slicer according to claims 1 or 2 further including, at a side opposite to the first and second surface (1; 2) a third and fourth surface (10; 11), wherein the third and the first surface lie optionally in planes that are parallel to each other, and/or the fourth and the second surface lie in planes that are parallel to each other.

4. Image slicer according to claim 3, wherein the transition between the third and fourth surface is inclined with respect to the edges E1 and E2 of the first and second surface.

5. Image slicer according to claims 1 to 4, wherein the image slicer includes a first and a second element (7; 8; 22), and the first and the second surface of the image slicer each are a surface or a part of a surface of a respective one of the first and second elements.

6. Image slicer according to claim 5, wherein the first element has a surface S1 (5) and the second element has a surface S2 (6) arranged so as to face the surface S1 of the first element, but with an air gap between the surfaces S1 and S2, and wherein further one or both of the surfaces S1 and S2 are entirely or partially aluminised.

7. Image slicer according to claim 5, wherein the first element has a surface S1 (5) and the second element has a surface S2 (6) arranged so as to face the surface S1 of the first element, and wherein further
one or both of the faces S1 and S2 are entirely or partially aluminised,
and/or the surfaces S1 and S2 are at least partially glued together by a glue preferably having a refraction index lower than the transparent material of at least one of the first and second elements,
and/or the first element's surface S1 or a portion thereof and the second element's surface S2 or a portion thereof are put in optical contact with each other.

8. Image slicer according to one of claims 1 to 7, wherein the image slicer includes a first and second portion (7; 8) each being prism-shaped, wherein the first and the second surface (1; 2) of the image slicer each coincide with or include a respective face of the first and the second prism-shaped portion.

9. Image slicer according to claim 8, wherein
the first portion (7) includes, in a surface of the image slicer located at a side opposite to the first and second surfaces, another face (10) that preferably lies in a plane parallel to the first surface (1),
and/or the second portion (8) includes, in a surface of the image slicer located at a side opposite to the first and second surfaces, another face (11) that preferably lies in a plane parallel to the second surface (2).

10. Image slicer according to claim 8 or 9, wherein further
the first and second portions (7; 8) are equal in shape,
and/or wherein the first portion and the second portion (7; 8) each are of a same transparent material such as glass or acrylic.

11. Image slicer according to one of claims 1 to 10, wherein the image slicer includes one, two, three or more further surface/s, each of which is inclined with respect to another one of the surfaces or to all other ones of the surfaces.

12. Spectrograph including an image slicer and an optical component having an optical axis, such as a lens or pinhole or an end of an optical fibre, the spectrograph being
**characterised in that**
the image slicer is arranged with respect to the optical component such that a light beam (9) having passed the optical component along its optical axis will irradiate a portion of an edge (3; 4) of the image slicer and include a first beam portion (12) that hits a first surface (1) of the image slicer and a second beam portion that does not hit the first surface of the image slicer,
such that the first beam portion will be guided, due to refraction, in another direction than the second beam portion.

13. System including two spectrographs and an image slicer according to one of claims 1 to 11, wherein the spectrographs and the image slicer are arranged such that, when the image slicer splits a light beam into a first and a second light beam portion (9a; 9b), the first light beam portion is directed to a first one of the spectrographs, and the second light beam portion is directed to a second one of the spectrographs.

14. Method for slicing a light beam (9) in a spectrograph,
**characterised by**
irradiating, with the light beam, a portion of an edge (3; 4) of an element (7; 8) including a transparent material such as glass or acrylic
such that a first beam portion (12) of the light beam (9) hits a first surface (1) of the element and a second beam portion of the light beam does not hit the first surface of the element,
whereby the first beam portion is guided, due to refraction, in another direction than the second beam portion.
